**Europäisches Patentamt**

**European Patent Office**

**Office européen des brevets**

(19)

(11) **EP 0 958 650 B1**

(12) **EUROPÄISCHE PATENTSCHRIFT**

(45) Veröffentlichungstag und Bekanntmachung des Hinweises auf die Patenterteilung:
**19.09.2001 Patentblatt 2001/38**

(51) Int Cl.⁷: **H02P 7/62**, H02M 5/45

(21) Anmeldenummer: **98907843.1**

(86) Internationale Anmeldenummer:
**PCT/DE98/00181**

(22) Anmeldetag: **21.01.1998**

(87) Internationale Veröffentlichungsnummer:
**WO 98/34336 (06.08.1998 Gazette 1998/31)**

(54) **ANTRIEBSEINRICHTUNG FÜR INDUSTRIEANLAGEN, INSBESONDERE FÜR ANLAGEN DER GRUNDSTOFFINDUSTRIE**

DRIVING MECHANISM FOR INDUSTRIAL INSTALLATIONS, IN PARTICULAR FOR PRIMARY INDUSTRY INSTALLATIONS

DISPOSITIF DE COMMANDE POUR INSTALLATIONS INDUSTRIELLES, NOTAMMENT POUR INSTALLATIONS DE L'INDUSTRIE DE BASE

(84) Benannte Vertragsstaaten:
**AT BE DE FI GB**

(30) Priorität: **04.02.1997 DE 19704122**

(43) Veröffentlichungstag der Anmeldung:
**24.11.1999 Patentblatt 1999/47**

(73) Patentinhaber: **SIEMENS AKTIENGESELLSCHAFT**
**80333 München (DE)**

(72) Erfinder:
• **KLUG, Rolf-Dieter**
**D-90425 Nürnberg (DE)**

• **SALZMANN, Theodor**
**D-91080 Spardorf (DE)**

(56) Entgegenhaltungen:
EP-A- 0 630 099     WO-A-92/15148
DE-A- 4 422 275     FR-A- 2 161 994

• SALZMANN T ET AL: "HIGH-POWER DRIVE SYSTEM WITH ADVANCED POWER CIRCUITRY AND IMPROVED DIGITAL CONTROL" 1.Januar 1991 , PROCEEDINGS OF THE INDUSTRY APPLICATIONS SOCIETY ANNUAL MEETING, DEARBORN, SEPT. 28 - OCT. 1, 1991, VOL. VOL. 1, NR. -, PAGE(S) 272 - 278 , INSTITUTE OF ELECTRICAL AND ELECTRONICS ENGINEERS XP000280166 siehe Seite 272 - Seite 275

**Beschreibung**

Antriebseinrichtung für Industrieanlagen, insbesondere für Anlagen der Grundstoffindustrie

Die Erfindung betrifft eine Antriebseinrichtung für Industrieanlagen, insbesondere für Anlagen der Grundstoffindustrie, mit zumindest einem Elektromotor und zumindest einem Umrichter mit Spannungszwischenkreis.

Drehzahlveränderbare Antriebe hoher Leistung sowie ihre Umrichter belasten die sie speisenden Energieversorgungsnetze in einem erheblichen Maße mit Stromoberschwingung. Daher sind beim Einsatz derartiger Antriebe für ihre Umrichter aufwendige Filterkreise nötig, um diese Oberschwingung zu reduzieren. Es ist bekannt, Oberschwingungsanteile durch den Einsatz von selbstgeführten Gleichrichtern mit abschaltbaren Leistungshalbleitern zu verringern. Jedoch kann ein selbstgeführter Gleichrichter bei niedriger Pulsfrequenz, insbesondere bei einer Pulsfrequenz hinab bis zur Grundschwingung des die Antriebseinrichtung speisende Wechselspannungs-Energieversorgungsnetzes, die Oberschwingung häufig nicht auf ein gefordertes Maß zu reduzieren. Damit ist auch bei dieser Lösung der Einsatz aufwendiger Filterkreise notwendig. Dieses Problem tritt insbesondere bei Antrieben für Walzgerüste auf.

Eine weitere Möglichkeit der Kompensation von Oberschwingungen offenbart die WO 92/15148 A1. Dabei werden verbleibende Freiheitsgrade bei einer Motorregelung zur Minimierung eines Störungsindex herangezogen. Der Störungsindex wird dabei als die Summe der quadrierten oder der betragsmäßigen Abweichungen von Soll- und Istströmen definiert.

Ferner ist durch die EP 0 746 086 A2 ein Stromrichter bekannt, der durch eine Steuer- und Regeleinrichtung gesteuert wird. Bei hohen Stromrichterleistungen ist die maximale Schaltfrequenz der Stromrichterventile begrenzt, so daß höherfrequente Resonanzschwingungen nicht ausgeregelt werden können. Um den aufwendigen Einsatz hoher Zwischenkreiskapazitäten zur Herabsetzung der Resonanzfrequenz zu vermeiden, werden die Resonanzschwingungen mittels einer Dämpfungseinrichtung in der Steuer- und Regeleinrichtung gedämpft.

Aufgabe der Erfindung ist es, eine Antriebsrichtung anzugeben, bei dem die Oberschwingung, die in das Energieversorgungsnetz eingespeist werden, verringert sind. Dabei ist es wünschenswert, die Antriebseinrichtung gegenüber bekannten Antriebseinrichtungen mit geringer Oberschwingung kostengünstiger zu gestalten.

Die Aufgabe wird erfindungsgemäß durch eine Antriebseinrichtung gemäß Anspruch 1 gelöst. Danach wird die Zwischenkreisspannung des Umrichters derart eingestellt, daß die durch die Antriebseinrichtung verursachten Oberschwingungen im Wechselspannungs-Energieversorgungsnetz im Sinne einer Optimierung minimiert werden. Dabei wird eine grundsätzliche Lehre für den Betrieb von Umrichtern für Industrieanlagen verlassen, wonach die Zwischenkreisspannung auf einen konstanten Wert zu regeln ist, der allenfalls in bezug auf die gewünschte Wirkleistungsaufnahme des an den Umrichter angeschlossenen Elektromotors angepaßt wird. Es hat sich überraschenderweise gezeigt, daß durch Verlassen dieses grundsätzlichen Kriteriums für den Betrieb eines Umrichters für Antriebe in Industrieanlagen der Oberschwingungsgehalt stark verringerbar ist. Dies gilt insbesondere bei niedrigen Schaltfrequenzen in einer Größenordnung des ein- bis fünffachen der Grundschwingung des Wechselspannungs-Energieversorgungsnetzes.

In vorteilhafter Ausgestaltung der Erfindung wird die Zwischenkreisspannung des Umrichters in Abhängigkeit von Meßwerten der Spannung des Wechselspannungs-Energieversorgungsnetzes derart eingestellt, daß die durch die Antriebseinrichtung verursachten Oberschwingungen im Wechselspannungs-Energieversorgungsnetz optimiert und/oder minimiert werden. Dabei weicht eine Minimierung der Oberschwingungen von ihrer Optimierung ab, wenn die Minimierung bestimmter Oberschwingungen unter Inkaufnahme bestimmter anderer Oberschwingungen gewünscht ist. Es hat sich gezeigt, daß die Einstellung der Zwischenkreisspannung des Umrichters in Abhängigkeit von der Spannung des Wechselspannungs-Energieversorgungsnetzes, insbesondere in Abhängigkeit von der Effektivspannung des Wechselspannungs-Energieversorgungsnetzes, besonders vorteilhaft in dem Sinne einstellbar ist, daß die durch die Antriebseinrichtung verursachten Oberschwingungen im Wechselspannungs-Energieversorgungsnetzes minimiert werden. Dazu wird vorteilhafterweise eine Meßeinrichtung zur Messung der Spannung, insbesondere der Effektivspannung, des Wechselspannungs-Energieversorgungsnetzes vorgesehen. Beim Einsatz mehrerer erfindungsgemäßer Vorrichtungen wird vorteilhafterweise nur eine einzige Meßeinrichtung vorgesehen, auf deren Information alle erfindungsgemäßen Antriebseinrichtungen zugreifen.

In einer weiteren vorteilhaften Ausgestaltung der Erfindung weist die Antriebseinrichtung eine Zwischenkreisspannungs-Berechnungseinheit auf, die die Zwischenkreisspannung in Abhängigkeit der Spannung des Wechselspannungs-Energieversorgungsnetzes berechnet.

Besonders vorteilhaft kommt die erfindungsgemäße Antriebseinrichtung für Antriebe in einem Leistungsbereich von 1-20 MW, vorteilhafterweise von 2-10 MW, bzw. in bezug auf Stoßlast für einen Leistungsbereich von 2-30 MW vorteilhafterweise von 4-20 MW zum Einsatz.

Die erfindungsgemäße Antriebseinrichtung hat sich weiterhin als besonders vorteilhaft in Verbindung mit Drehstrommotoren in Tandemschaltung erwiesen, d.h. bei Schaltungen, bei der der Drehstrommotor offene Wicklungen aufweist, die beidseitig von Umrichtern gespeist werden.

Das erfindungsgemäße Antriebssystem kommt ferner besonders vorteilhaft zum Antrieb von Walzgerüsten einer Walzstraße zur Anwendung.

Der Umrichter der erfindungsgemäßen Antriebseinrichtung kann im übrigen als luftgekühlter Umrichter ausgeführt sein.

Weitere Vorteile und erfinderische Einzelheiten ergeben sich aus der nachfolgenden Beschreibung von Ausführungsbeispielen, anhand der Zeichnungen und in Verbindung mit den Unteransprüchen. Im einzelnen zeigen:

FIG 1   eine erfindungsgemäße Antriebseinrichtung,
FIG 2   eine Zwischenkreisspannungsberechnungseinrichtung,
FIG 3   eine Kennlinie zur Ermittlung eines optimalen Aussteuerungsgrades,
FIG 4   eine Umrichteranordnung zur Speisung eines Drehstrommotors mit Teilumrichter in Dreipunktschaltung auf der Netz- und Maschinenseite,
FIG 5   eine Umrichteranordnung zur beidseitigen Speisung eines Drehstrommotors mit offener Wicklung mit Teilumrichter in Dreipunktschaltung,
FIG 6   den Einsatz einer erfindungsgemäßen Antriebseinrichtung in einem Walzwerk.

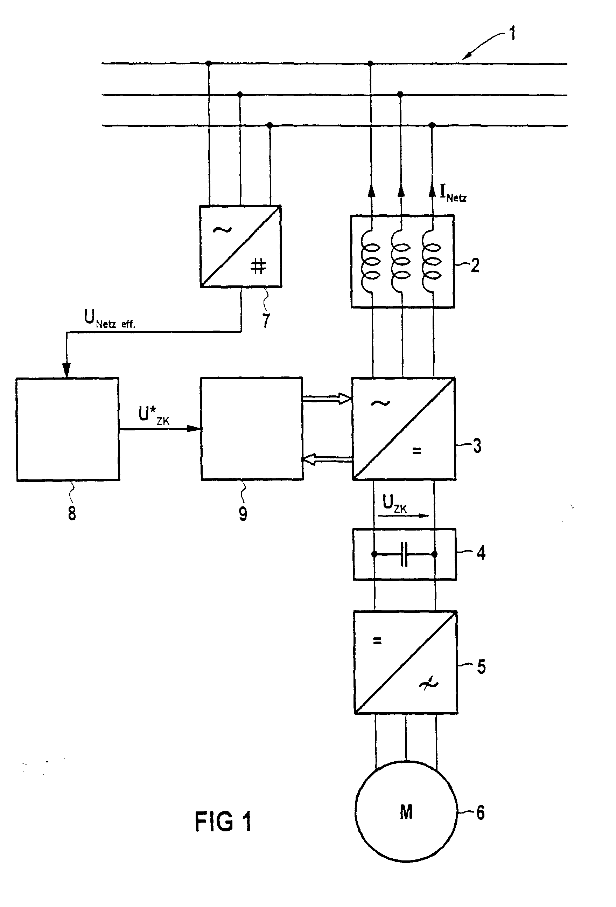

FIG 1 zeigt eine erfindungsgemäße Antriebseinrichtung. Dabei wird ein Drehstrommotor 6 über einen Umrichter und einen Transformator 2 bzw. Drosseln durch ein Wechselspannungs-Energieversorgungsnetz 1 mit elektrischer Energie versorgt. Der Umrichter weist einen selbstgeführten Gleichrichter 3 mit abschaltbaren Leistungshalbleitern, einen Gleichspannungszwischenkreis 4, dessen Zwischenkreisspannung $U_{ZK}$ vom Gleichrichter 3 eingestellt und geregelt wird, sowie einen selbstgeführten Wechselrichter 5 zur Regelung des Drehstrommotors 6 auf. Der selbstgeführte Gleichrichter 3 wird mittels einer Regeleinrichtung 9 derart geregelt, daß sich eine Zwischenkreisspannung $U_{ZK}$ gemäß einem vorgegebenen Sollwert $U^*_{ZK}$ einstellt. Die Zwischenkreissollspannung $U^*_{ZK}$ wird mittels einer Zwischenkreisspannungs-Berechnungseinrichtung 8 berechnet, die die Zwischenkreissollspannung $U^*_{ZK}$ in Abhängigkeit der Wechselspannung des Wechselspannungs-Energieversorgungsnetzes 1 ermittelt. Dazu weist die erfindungsgemäße Antriebseinrichtung vorteilhafterweise eine Meßeinrichtung 7 zur Messung des Effektivwertes $U_{netz\,eff}$ der Leiterspannung des Wechselspannungs-Energieversorgungsnetzes 1 auf.

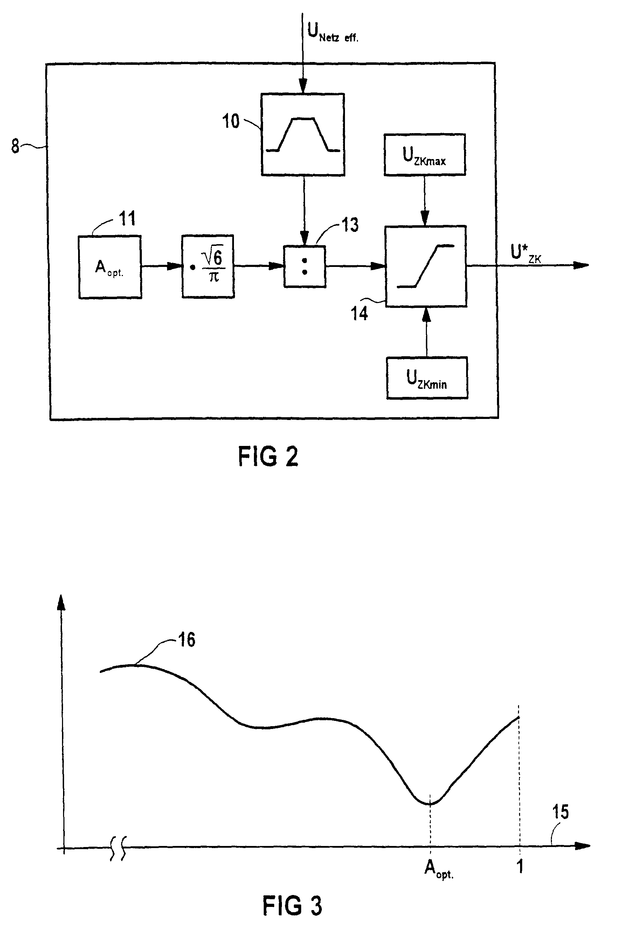

FIG 2 zeigt eine Zwischenkreisspannungs-Berechnungseinrichtung 8 in detaillierter Darstellung. Das Ausgangssignal einer Aussteuerungsgradvorgabe 11 zur Vorgabe eines optimalen Aussteuerungsgrades im Hinblick auf den Klirrfaktor, d.h. den Oberschwingungsgehalt des Eingangsstromes $I_{Netz}$ (vergl. FIG 1), wird mit der Konstanten $\sqrt{6}\,/\pi$ multipliziert. Durch diesen Wert wird die Effektivspannung $U_{netz\,eff}$ des Wechselspannungs-Energieversorgungsnetzes dividiert. In vorteilhafter Ausgestaltung wird die Änderungsgeschwindigkeit der Effektivspannung $U_{netz\,eff}$ des Wechselspannungs-Energieversorgungsnetzes jedoch zunächst durch einen Änderungsbegrenzer 10 begrenzt. Die minimale Zwischenkreisspannung $U_{ZKmin}$ wird so vorgegeben, daß der selbstgeführte Wechselrichter 5 (vergl. FIG 1) eine ausreichend große Wirkleistung an den Drehstrommotor 6 abgeben kann. Die maximale Zwischenkreisspannung $U_{ZKmax}$ wird so vorgegeben, daß die Leistungshalbleiter des selbstgeführten Gleichrichters 3 und des selbstgeführten Wechselrichters 5 (vergl. FIG 1) nicht geschädigt werden. Das Ausgangssignal des Dividierers 13 wird einem Begrenzer 14 zugeführt, dessen Grenzwerte die maximale Zwischenkreisspannung $U_{ZKmax}$ und die minimale Zwischenkreisspannung $U_{ZKmin}$ sind. Ausgangssignal des Begrenzers 14 ist eine Sollzwischenkreisspannung $U^*_{ZK}$.

FIG 3 zeigt den Verlauf des Netzstromklirrfaktors 16 über dem Aussteuerungsgrad 15 des selbstgeführten Gleichrichters. Der Aussteuerungsgrad eines selbstgeführten Gleichrichters ist das Verhältnis von Grundschwingungsscheitelwert der vom Gleichrichter 3 erzeugten Spannung an der Sekundärseite des Transformators 2 zum maximal vom Gleichrichter 3 erzeugbaren Grundschwingungsscheitelwert dieser Spannung. Für verschiedene Pulsmuster zur Ansteuerung der Halbleiter des selbstgeführten Gleichrichters 3 gibt es einen optimalen Aussteuerungsgrad $A_{opt}$, für den der Netzspannungsklirrfaktor 16 nahezu minimal ist. Aussteuerungsgrad und Zwischenkreisspannung $U_{ZK}$ stehen in einem bestimmten Verhältnis zueinander, das vom Effektivwert der Netzspannung abhängt. Die Zwischenkreisspannung $U_{ZK}$ wird deshalb derart eingestellt, daß ein optimaler Aussteuerungsgrad $A_{opt}$ bei dem jeweils vorhandenen Netzspannungseffektivwert erreicht wird.

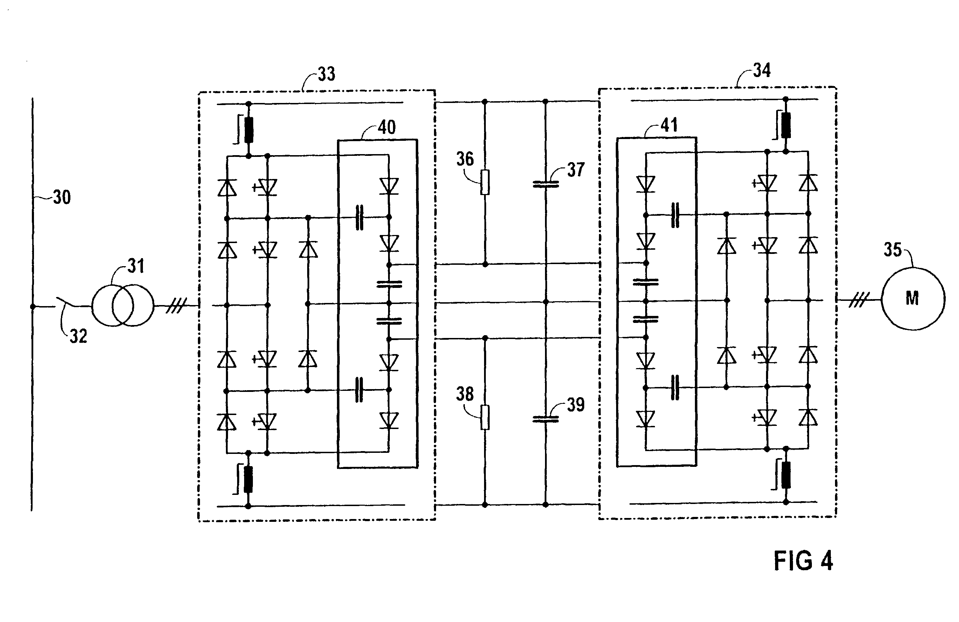

FIG 4 zeigt eine Umrichteranordnung zur Speisung einer Drehstrommaschine, wobei der netzseitige Teilumrichter 33 und der motorseitige Teilumrichter 34 mit GTO's in Dreipunktschaltung, jeweils gleich, ausgeführt sind. Es ist jeweils der Hauptstromkreis eines Phasenbausteins mit seinem Beschaltungsnetzwerk 40 bzw.41 dargestellt. Die Teilumrichter 33 und 34 bestehen jeweils aus 3 solchen Phasenbausteinen mit Beschaltungsnetzwerk. Der P-seitige Zwischenkreiskondensator 37 bildet gemeinsam mit dem N-seitigen Zwischenkreiskondensator 39 den Gleichspannungszwischenkreis, über den die beiden Teilumrichter verbunden sind. Der P-seitige Beschaltungsrückladewiderstand 36 und der N-seitige Beschaltungsrückladewiderstand 38 sind mit der jeweiligen Seite der Beschaltungsnetzwerke 40 bzw. 41 verbunden.

Der netzseitige Teilumrichter 33 ist eingangsseitig über den Transformator 31 und dem Leistungsschalter 32 mit dem Netz 30 verbunden. Der maschinenseitige Teilumrichter 34 ist ausgangsseitig mit dem Drehstrommotor 35 verbunden.

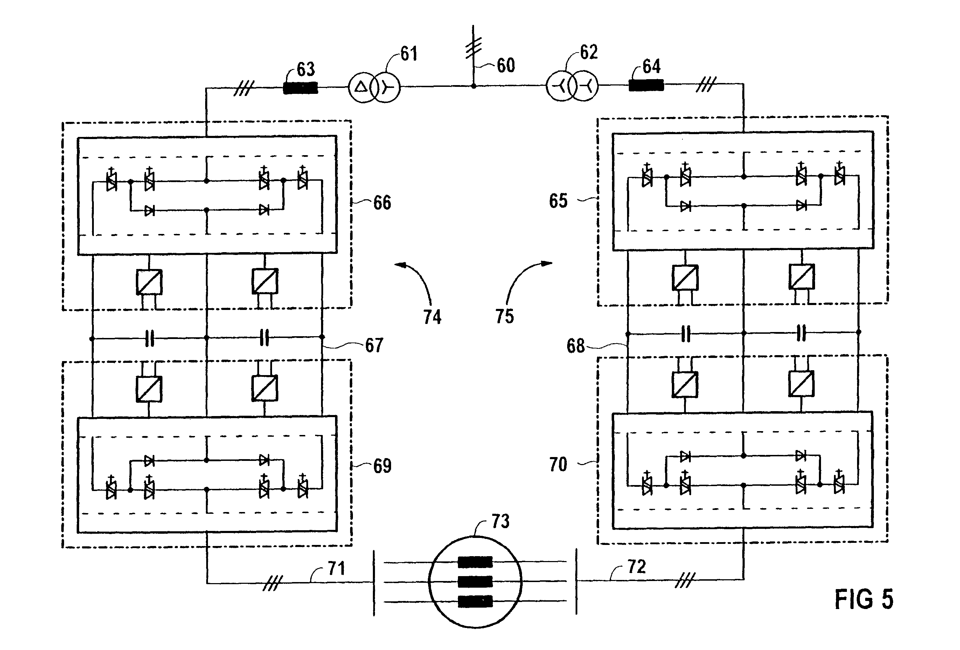

Bei der Anordnung in FIG 5 ist ein erster Umrichter 74 und ein zweiter Umrichter 75 ausgangsseitig jeweils mit einer Seite 71 und 72 der offenen dreiphasigen Wicklung des Drehstrommotors 73 verbunden. Durch diese Anordnung wird neben einer Leistungsverdoppelung ein besonders vorteilhaftes Betriebsverhalten erreicht, da, entsprechend abgestimmtes Pulsverfahren vorausgesetzt, selbst bei niedriger Schaltfrequenz der GTO-Thyristoren weitgehend sinusförmiger Stromverlauf im Motor mit geringem Oberschwingungsgehalt erreicht wird.

Netzseitig ist der erste Umrichter 74 über eine optionale netzseitige Zusatzinduktivität 63 und einen ersten Transformator 61 z.B. in Stern/Dreieckschaltung mit dem Energieversorgungsnetz 60 verbunden. Der zweite Umrichter 75 ist über eine optionale netzseitige Zusatzinduktivität 64 und einen zweiten Transformator 62 vorteilhafterweise um elektrisch 30° gegenüber dem ersten Transformator 61 versetzt (z.B. in Stern/Sternschaltung) mit dem Energieversorgungsnetz 60 verbunden. Durch diese Anordnung kommt es am Netz zu besonders günstigen Netzrückwirkungen, insbesondere wenn, wie im vorliegenden Beispiel, die Umrichter aus Teilumrichtern in Dreipunktschaltung bestehen. Es kommt dabei selbst bei Grundschwingungstaktung der selbstgeführten Netzstromrichter zu sinusförmigem Stromverlauf mit sehr geringem Oberschwingungsgehalt.

Die beiden Umrichter 74 und 75 weisen jeweils netzseitige Teilumrichter 66 bzw. 65 und maschinenseitige Teilumrichter 69 bzw. 70 auf, die jeweils über einen Gleichspannungszwischenkreis 67 bzw.68 verbunden sind. Die beiden Gleichspannungszwischenkreise 67 bzw.68 sind voneinander elektrisch getrennt. Alle Teilumrichter 66,65,69,70 sind in Dreipunktschaltung, vorzugsweise mit RC-GTO's, ausgeführt.

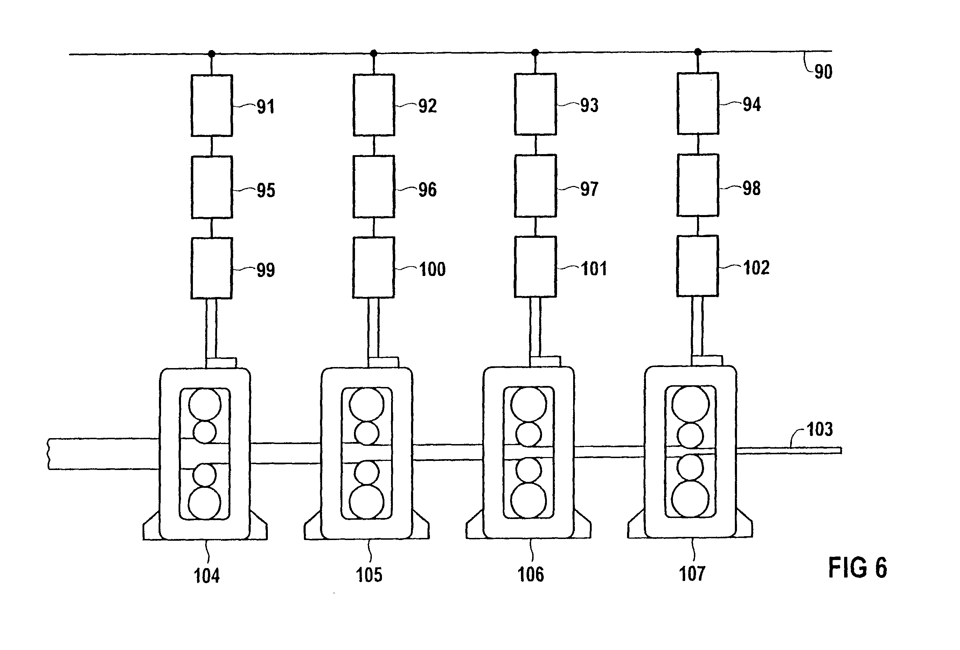

FIG 6 zeigt den Einsatz von erfindungsgemäßen Antriebseinrichtungen in einem Walzwerk. Das Walzgut 103 wird in den Walzgerüsten 104,105,106,107, die von elektrischen Motoren 99,100,101,102 angetrieben werden, gewalzt. Die Motoren 99,100,101,102 werden über je einen Transformator 91,92,93,94 und je einen Umrichter 95,96,97,98 durch ein Energieversorgungsnetz 90 gespeist. Die Umrichter 95,96,97,98 weisen einen selbstgeführten Gleichrichter 3 mit Regelung 9, einen Spannungszwischenkreis 4, einen selbstgerichteten Wechselrichter 5, eine Zwischenkreisspannungs-Berechnungseinrichtung 8 sowie optional eine Meßeinrichtung 7 auf. In alternativer Ausgestaltung dazu wird eine Meßeinrichtung 7 verwendet, deren Meßwerte allen Antriebseinrichtungen zugeführt werden.

Bei höheren Leistungen kommt für die genannten Transformatoren 91,92,93,94, Umrichter 95,96,97,98 und Motoren 99,100,101,102 jeweils die Schaltung gemäß FIG 5 mit je 2 Transformatoren, 2 Umrichtern und offenen Motorwicklungen zum Einsatz.

## Patentansprüche

1. Antriebseinrichtung für Industrieanlagenteile, insbesondere für Teile von Anlagen der Grundstoffindustrie, mit zumindest einem Elektromotor und zumindest einem Umrichter mit Spannungszwischenkreis, über den der Elektromotor mit einem Wechselspannungs-Energieversorgungsnetz verbunden ist, wobei der Umrichter die Wirkleistungsaufnahme bzw. Drehmoment und Drehzahl des Elektromotors aus dem Wechselspannungs-Energieversorgungsnetz regelt,
   **dadurch gekennzeichnet,**
   **daß** die Antriebseinrichtung die Zwischenkreisspannung ($U_{ZK}$) derart einstellend ausgebildet ist, daß die durch die Antriebseinrichtung verursachten Oberschwingungen im Wechselspannungs-Energieversorgungsnetz (1) im Sinne einer Optimierung minimiert werden.

2. Antriebseinrichtung nach Anspruch 1,
   **dadurch gekennzeichnet,**
   **daß** es die Zwischenkreisspannung ($U_{ZK}$) in Abhängigkeit von Meßwerten der Spannung des Wechselspannungs-Energie-versorgungsnetzes (1) derart einstellend ausgebildet ist, daß die durch die Antriebseinrichtung verursachten Oberschwingungen im Wechselspannungs-Energieversorgungsnetzes (1) im Sinne einer Optimierung minimiert werden.

3. Antriebseinrichtung nach Anspruch 2,
   **dadurch gekennzeichnet,**
   **daß** sie eine Zwischenkreisspannungs-Berechnungseinrichtung (8) aufweist, die einen günstigen Zwischenkreisspannungssollwert in Abhängigkeit der Spannung des Wechselspannungs-Energieversorgungsnetzes (1) berechnet.

4. Antriebseinrichtung nach einem der Ansprüche 1,2 oder 3,
   **dadurch gekennzeichnet,**
   **daß** der Umrichter Leistungshalbleiter aufweist, die mittels einer Regeleinrichtung (9) geregelt bzw. gesteuert werden.

5. Antriebseinrichtung nach einem der Ansprüche 1,2,3 oder 4,
   **dadurch gekennzeichnet,**
   **daß** sie eine Meßeinrichtung (7) zur Messung der Spannung, insbesondere der effektiven Spannung ($U_{netzeff}$), des Wechsel spannungs-Energieversorgungsnetzes (1) aufweist.

6. Antriebseinrichtung nach einem der vorhergehenden Ansprüche,
**dadurch gekennzeichnet,**
**daß** der Umrichter als Umrichter mit Gleichspannungszwischenkreis in Dreipunktschaltung ausgebildet ist.

7. Antriebseinrichtung nach einem der Ansprüche 1 bis 5,
**dadurch gekennzeichnet,**
**daß** der Umrichter als Umrichter mit Gleichspannungszwischenkreis in n-Punkt-Schaltung ausgebildet ist, wobei n vorzugsweise 2 oder 3 ist, jedoch auch ganzzählige Werte bis 10 annehmen kann.

8. Antriebseinrichtung nach einem der Ansprüche 1 bis 7,
**dadurch gekennzeichnet,**
**daß** die abschaltbaren Leistungshalbleiter als GTO's, d.h. als Gate Turn Off Thyristors, ausgebildet sind.

9. Antriebseinrichtung nach einem der Ansprüche 1 bis 8,
**dadurch gekennzeichnet,**
**daß** der Umrichter abschaltbare Leistungshalbleiter aufweist, die als MCT's, d.h. als MOS Controlled Thyristors, ausgebildet sind.

10. Antriebseinrichtung nach einem der Ansprüche 1 bis 7,
**dadurch gekennzeichnet,**
**daß** der Umrichter abschaltbare Leistungshalbleiter aufweist, die als Leistungstransistoren, insbesondere als IGBT's, d.h. Insulated Gate Bipolar Transistors, ausgebildet sind.

11. Antriebseinrichtung nach einem oder mehreren der Ansprüche 1 bis 10,
**dadurch gekennzeichnet,**
**daß** die abschaltbaren Leistungshalbleiter rückwärts leitend ausgebildet sind.

12. Walzstraße mit einem oder mehreren Walzgerüsten (104,105, 106,107) zum Walzen von Walzgut (103), insbesondere einem Walzband, wobei zumindest ein Walzgerüst mit einer Antriebseinrichtung gemäß einem der vorhergehenden Ansprüche angetrieben wird.

13. Walzstraße nach Anspruch 12,
**dadurch gekennzeichnet,**
**daß** die Mehrzahl der Walzgerüste, insbesondere alle Walzgerüste (104,105,106,107) mit einer Antriebseinrichtung nach einem der Ansprüche 1 bis 11 angetrieben werden.

## Claims

1. Driving mechanism for industrial installation sections, in particular for parts of primary industry installations, having at least one electric motor and at least one converter, having a voltage link, through which the electric motor is connected to an AC-voltage power supply network, with the converter regulating the effective power consumption or the torque and rotational speed of the electric motor from the AC-voltage power supply network,
**characterised in that**
the driving mechanism is designed to set the link voltage ($U_{ZK}$) such that the harmonics induced by the driving mechanism are minimised in the AC-voltage power supply network (1) to an optimum value.

2. Driving mechanism in accordance with Claim 1
**characterised in that**
it is designed to set the link voltage ($U_{ZK}$) as a function of measured values of the AC-voltage power supply network (1) voltage such that the harmonics induced by the driving mechanism are minimised in the AC-voltage power supply network (1) to an optimum value.

3. Driving mechanism in accordance with Claim 2
**characterised in that**
it has a link voltage computing device (8) which computes a favourable link voltage setpoint value as a function of the voltage of the AC-voltage power supply network (1).

4. Driving mechanism in accordance with one of Claims 1, 2, or 3,
**characterised in that**
the converter has power semiconductors that are regulated or controlled using a regulator (9).

5. Driving mechanism in accordance with one of Claims 1, 2, 3, or 4,
**characterised in that**
it has a measuring device (7) for measuring the voltage, in particular the effective voltage ($U_{netzeff}$) of the AC-voltage power supply network (1).

6. Driving mechanism in accordance with one of the above claims,
**characterised in that**
the converter is designed as a converter with a delta-connected DC voltage link.

7. Driving mechanism in accordance with one of Claims 1 to 5,
**characterised in that**
the converter is designed as a converter with a DC voltage link connected at n points, where n is preferably 2 or 3, but may assume integer values up to 10.

8. Driving mechanism in accordance with one of Claims 1 to 7,
   **characterised in that**
   the gate turn-off power semiconductors are designed as GTOs, i.e. as gate turn-off thyristors.

9. Driving mechanism in accordance with one of Claims 1 to 8,
   **characterised in that**
   the converter has gate turn-off power semiconductors which are designed as MCTs, i.e. MOS-controlled thyristors.

10. Driving mechanism in accordance with one of Claims 1 to 7,
    **characterised in that**
    the converter has gate turn-off power semiconductors which are designed as power transistors, in particular as IGBTs, i.e. insulated gate bipolar transistors.

11. Driving mechanism in accordance with one or more of Claims 1 to 10,
    **characterised in that**
    the gate turn-off power semiconductors are designed to be reverse conductive.

12. Rolling mill line with one or more rolling stands (104, 105, 106, 107) for rolling rolled stock (103), in particular a rolled strip, where at least one rolling stand is driven by a driving mechanism in accordance with one of the above claims.

13. Rolling mill line in accordance with Claim 12,
    **characterised in that**
    the majority of rolling stands, in particular all the rolling stands (104, 105, 106, 107), are driven via a driving mechanism in accordance with one of Claims 1 to 11.

## Revendications

1. Dispositif de commande pour parties d'installations industrielles, notamment pour parties d'installations de l'industrie de base, ayant au moins un moteur électrique et au moins un convertisseur à circuit intermédiaire de tension, par l'intermédiaire duquel le moteur électrique est relié à un réseau d'alimentation en énergie à tension alternative, le convertisseur régulant la consommation de puissance active respectivement le couple et la vitesse de rotation du moteur électrique à partir du réseau d'alimentation en énergie à tension alternative,
   **caractérisé par** le fait que le dispositif de commande est conçu de manière à régler la tension de circuit intermédiaire ($U_{ZK}$) de telle sorte que les oscillations harmoniques dues au dispositif de commande dans le réseau d'alimentation en énergie à tension alternative (1) sont minimisées dans le sens d'une optimisation.

2. Dispositif de commande selon la revendication 1,
   **caractérisé par** le fait qu'il est conçu de manière à régler la tension de circuit intermédiaire ($U_{ZK}$) en fonction de valeurs mesurées de la tension du réseau d'alimentation en énergie à tension alternative (1) de telle sorte que les oscillations harmoniques dues au dispositif de commande dans le réseau d'alimentation en énergie à tension alternative (1) sont minimisées dans le sens d'une optimisation.

3. Dispositif de commande selon la revendication 2,
   **caractérisé par** le fait qu'il comporte un dispositif de calcul de tension de circuit intermédiaire (8) qui calcule une valeur de consigne de tension de circuit intermédiaire intéressante en fonction de la tension du réseau d'alimentation en énergie à tension alternative (1).

4. Dispositif de commande selon l'une des revendications 1, 2 ou 3,
   **caractérisé par** le fait que le convertisseur comporte des semi-conducteurs de puissance qui sont régulés ou commandés au moyen d'un dispositif régulateur (9).

5. Dispositif de commande selon l'une des revendications 1, 2, 3 ou 4,
   **caractérisé par** le fait qu'il comporte un dispositif de mesure (7) pour la mesure de la tension, notamment de la tension efficace ($U_{netz\ eff}$), du réseau d'alimentation en énergie à tension alternative (1).

6. Dispositif de commande selon l'une des revendications précédentes,
   **caractérisé par** le fait que le convertisseur est conçu comme un convertisseur avec circuit intermédiaire de tension continue dans un circuit à trois points.

7. Dispositif de commande selon l'une des revendications 1 à 5,
   **caractérisé par** le fait que le convertisseur est conçu comme un convertisseur avec circuit intermédiaire de tension continue dans un circuit à n points, n étant égal de préférence à 2 ou 3 mais pouvant aussi prendre des valeurs entières jusqu'à 10.

8. Dispositif de commande selon l'une des revendications 1 à 7,

**caractérisé par** le fait que les semi-conducteurs de puissance interruptibles sont conçus comme des GTO, c'est-à-dire des Gate Turn Off Thyristors.

9. Dispositif de commande selon l'une des revendications 1 à 8,

**caractérisé par** le fait que le convertisseur comporte des semi-conducteurs de puissance interruptibles qui sont conçus comme des MCT, c'est-à-dire des MOS Controlled Thyristors.

10. Dispositif de commande selon l'une des revendications 1 à 7,

**caractérisé par** le fait que le convertisseur comporte des semi-conducteurs de puissance interruptibles qui sont conçus comme des transistors de puissance, notamment comme des IGBT, c'est-à-dire des Insulated Gate Bipolar Transistors.

11. Dispositif de commande selon l'une ou plusieurs des revendications 1 à 10,

**caractérisé par** le fait que les semi-conducteurs de puissance interruptibles sont conçus de manière à conduire en sens inverse.

12. Laminoir comportant une ou plusieurs cages de laminoir (104, 105, 106, 107) pour laminer des matières à laminer (103), notamment un ruban à laminer, au moins une cage de laminoir étant commandée avec un dispositif de commande selon l'une des revendications précédentes.

13. Laminoir selon la revendication 12,

**caractérisé par** le fait que la majorité des cages de laminoir, notamment toutes les cages de laminoir (104, 105, 106, 107), sont commandées par un dispositif de commande selon l'une des revendications 1 à 11.

1

$I_{Netz}$

~
#

2

$U_{Netz\ eff.}$

7

$U^*_{ZK}$

~
=

3

8

9

$U_{ZK}$

4

=
~

5

M

6

FIG 1

**FIG 2**

**FIG 3**

FIG 4

FIG 5

EP 0 958 650 B1

FIG 6

EP 0 958 650 B1